# EUROPEAN PATENT APPLICATION

(11) **EP 1 702 932 A1**
(43) Date of publication of application: **20.09.2006**
(21) Application number: 04820261.8
(22) Date of filing: 09.12.2004
(51) Int. Cl.: C08F 6/14, C08L 27/12, C08J 3/12

(54) **WATER BASE DISPERSION OF FLUORINATED POLYMER AND PROCESS FOR PRODUCING THE SAME**

(30) Priority: 09.12.2003 JP 2003410486
(71) Applicant: DAIKIN INDUSTRIES, LTD., Osaka-shi, Osaka 530-8323 (JP)
(72) Inventor: TSUDA, Nobuhiko, c/o Daikin Industries, Ltd., Settsu-shi, Osaka 5668585 (JP); SAWAUCHI, Chie, c/o Daikin Industries, Ltd., Settsu-shi, Osaka 5668585 (JP); SAWADA, Yasuhiko, c/o Daikin Industries, Ltd., Settsu-shi, Osaka 5668585 (JP); SHIMIZU, Tetsuo, c/o Daikin Industries, Ltd., Settsu-shi, Osaka 5668585 (JP)
(74) Representative: HOFFMANN EITLE
(86) International application number: PCT/JP2004/018375
(87) International publication number: WO 2005/056614

(57) **Abstract**

The object of the present invention is a fluoropolymer aqueous dispersion showing only a moderate viscosity increase upon temperature rise and having a low fluorine-containing anionic surfactant concentration as well as a method of producing such fluoropolymer aqueous dispersion. The present invention provides a fluoropolymer aqueous dispersion comprising a particle comprising a fluoropolymer dispersed in an aqueous medium in the presence of a nonionic surfactant, wherein a supernatant for assaying as obtained by subjecting the fluoropolymer aqueous dispersion to 30 minutes of centrifugation at 25°C and at a gravitational acceleration of 1677G, when subjected to high-performance liquid chromatography [HPLC] under the conditions of a flow rate of 1.0 ml/minute and a column temperature of 40°C using an acetonitrile/0.05 M aqueous solution of phosphoric acid (60/40% by volume) mixture as a developing solution, followed by detection at an absorption wavelength at which the nonionic surfactant can be identified, shows a ratio (A¹/A⁰), which is the ratio between the total area (A⁰) under the detected line and the area (A¹) under the detected line over a retention time period shorter than 16 minutes, of not lower than 0.4 and the supernatant for assaying has a fluorine-containing anionic surfactant content of not higher than 100 ppm.

## Description

### TECHNICAL FIELD

The present invention relates to a fluoropolymer aqueous dispersion, a method of producing the fluoropolymer aqueous dispersion, a fluoropolymer powder, and a fluoropolymer molding.

### BACKGROUND ART

As regards fluoropolymer aqueous dispersions, a technology of reducing the fluorine-containing anionic surfactant level in a polytetrafluoroethylene [PTFE] aqueous dispersion which comprises adding a nonionic surfactant for concentration and a nonionic surfactant for stabilization and repeating phase separation/concentration of that dispersion has been disclosed (cf. e.g. Patent Document 1 : U.S. Patent No. 3,301,807).

Further, for reducing the fluorine-containing anionic surfactant concentration, a method comprising carrying out ultrafiltration concentration, and a method comprising contacting with an anion exchanger for concentration, among others, have been proposed (cf. e.g. Patent Document 2: Japanese Patent Publication (Kokoku) H02-34971 (Claim 1, Table 1); Patent Document 3: (Japanese Kohyo Publication 2002-532583 (Claim 1)).

However, the fluoropolymer aqueous dispersions obtained by these methods show a high viscosity-temperature dependency and, on the occasion of impregnation therewith, for instance, the workability in impregnation decreases, producing such a problem as a decrease in bond strength of coatings.

A fluoropolymer aqueous dispersion containing, as a surfactant, a polyoxyethylene alkyl ether represented by RO(CH₂CH₂O)ₙH (in which R represents a saturated or unsaturated aliphatic hydrocarbon group containing 8 to 18 carbon atoms and n represents 5 to 18) and having an ethylene oxide unit content of 65 to 70% by weight has been proposed as one having a low viscosity at ordinary temperature (cf. e.g. Patent Document 4: Japanese Patent No. 3,346,090 (Claim 1)).

As regards the above fluoropolymer aqueous dispersion, however, the above-cited document does not describe those cases where the fluorine-containing anionic emulsifier concentration is low, nor discloses that the temperature rise-due viscosity increase is inhibited then.

As a fluoropolymer aqueous dispersion low in viscosity at ordinary temperature, one improved in mechanical stability by adding an anionic emulsifier represented by R-Ph-O- (CH₂CH₂O)ₙCH₂CH₂SO₃M (in which Ph represents a phenylene group, R represents an alkyl group containing 8 to 12 carbon atoms, n represents an integer of 1 to 6 and M represents Na, K or NH₄) has been disclosed (c.f. e.g. Patent Document 5: Japanese Kokai Publication H08-20699).

In this publication, however, there is no description of the reduction of the fluorine-containing anionic surfactant concentration by removing other surfactants than the above-mentioned emulsifier and there is no description of a fluoropolymer aqueous dispersion improved in mechanical stability by addition of a nonionic surfactant to a fluoropolymer aqueous dispersion reduced in fluorine-containing anionic surfactant level.

### DISCLOSURE OF INVENTION

### PROBLEMS WHICH THE INVENTION IS TO SOLVE

In view of the above-discussed state of the art, it is an object of the present invention to provide a fluoropolymer aqueous dispersion showing only a moderate viscosity increase upon temperature rise and having a low fluorine-containing anionic surfactant concentration as well as a method of producing such fluoropolymer aqueous dispersion.

### MEANS FOR SOLVING THE PROBLEMS

The present invention provides a fluoropolymer aqueous dispersion comprising a particle comprising a fluoropolymer dispersed in an aqueous medium in the presence of a nonionic surfactant, wherein a supernatant for assaying as obtained by subjecting the fluoropolymer aqueous dispersion to 30 minutes of centrifugation at 25°C and at a gravitational acceleration of 1677G, when subjected to high-performance liquid chromatography [HPLC] under the conditions of a flow rate of 1.0 ml/minute and a column temperature of 40°C using an acetonitrile/0.05 M aqueous solution of phosphoric acid (60/40% by volume) mixture as a developing solution, followed by detection at an absorption wavelength at which the nonionic surfactant can be identified, shows a ratio (A¹/A⁰), which is the ratio between the total area (A⁰) under the detected line and the area (A¹) under the detected line over a retention time period shorter than 16 minutes, of not lower than 0.4 and the supernatant for assaying has a fluorine-containing anionic surfactant content of not higher than 100 ppm.

The present invention provides a method of producing the fluoropolymer aqueous dispersion which comprises adding a nonionic surfactant (B) to a pretreatment fluoropolymer aqueous dispersion containing a nonionic surfactant (A), wherein the supernatant for assaying as obtained by subjecting the pretreatment fluoropolymer aqueous dispersion to 30 minutes of centrifugation at 25°C and at a gravitational acceleration of 1677G has a fluorine-containing anionic surfactant content of not higher than 100 ppm, the nonionic surfactant (A) has an HLB of 12 to 14 and the nonionic surfactant (B) has an HLB of 13 to 15.

The present invention provides a fluoropolymer powder which is obtained by drying a wet powder obtained from the fluoropolymer aqueous dispersion.

The present invention provides a fluoropolymer molding which is obtained by carrying out a molding/processing using the fluoropolymer aqueous dispersion or the fluoropolymer powder.

In the following, the invention is described in detail.

The fluoropolymer aqueous dispersion of the invention comprises a particle comprising a fluoropolymer dispersed in an aqueous medium in the presence of a nonionic surfactant.

The fluoropolymer is a polymer containing a carbon atom-bound fluorine atom.

In the present invention, the fluoropolymer is obtained by polymerizing one or more fluoromonomers and it may also be one obtained by copolymerizing a fluorine-free monomer(s) in such an amount that will not impair the fundamental performance characteristics as a fluoropolymer.

The fluoromonomer is not particularly restricted but may be, for example, a fluoroolefin, a fluorinated cyclic monomer, or a fluorinated alkyl vinyl ether.

The fluoroolefin includes, among others, tetrafluoroethylene [TFE], chlorotrifluoroethylene [CTFE], hexafluoropropylene [HFP], vinyl fluoride, vinylidene fluoride [VDF], trifluoroethylene, hexafluoroisobutylene, and perfluorobutylethylene.

The fluorinated cyclic monomer includes perfluoro-2,2-dimethyl-1,3-dioxole [PDD] and perfluoro-2-methylene-4-methyl-1,3-dioxolane [PMD], among others.

The fluorinated alkyl vinyl ether includes, among others, monomers represented by the formula CZ¹₂=CZ²OR¹ or CZ¹₂=CZ²OR²OR¹ [in which the two Z¹ are the same or different and each is H or F, Z² is H or F, R¹ is an alkyl group containing 1 to 8 carbon atoms with the hydrogen atoms thereof being partly or wholly substituted by a fluorine atom or atoms and R² is an alkylene group containing 1 to 8 carbon atoms with the hydrogen atoms thereof being partly or wholly substituted by a fluorine atom or atoms.

Preferred as the fluorinated alkyl vinyl ether are, for example, perfluoro(methyl vinyl ether) [PMVE], perfluoro(ethyl vinyl ether) [PEVE], and perfluoro(propyl vinyl ether) [PPVE].

The fluorine-free monomer is not particularly restricted but may be any one copolymerizable with the fluoromonomer (s) mentioned above. For example, it may be a hydrocarbon monomer. The hydrocarbon monomer may contain one or more halogen atoms other than fluorine, such an element(s) as oxygen or/and nitrogen and/or one or more various substituents.

The hydrocarbon monomer includes, among others, alkenes, alkyl vinyl ethers, vinyl esters, alkyl allyl ethers, and alkyl allyl esters.

The fluoropolymer is not particularly restricted but includes, among others, non-melt-processable fluoropolymers, melt-processable fluoropolymers, and elastomeric copolymers.

As the non-melt-processable fluoropolymers, there may be mentioned, for example, tetrafluoroethylene homopolymers [PTFE], modified polytetrafluoroethylenes [modified PTFE] and like tetrafluoroethylene [TFE] polymers.

The term "modified PTFE" as used herein means a non-melt-processable copolymer of TFE and a minor constituent monomer(s) used in a very small proportion.

The minor constituent monomer includes, among others, the above-mentioned fluoroolefin, fluorinated (alkyl vinyl ether), fluorinated cyclic monomer and perfluoro(alkylethylene) species. Preferred as the minor constituent monomer are CTFE, PPVE and HFP, among others.

In the modified PTFE, the minor constituent monomer-derived minor constituent monomer unit content relative to all the monomer units is generally within the range of 0.001 to 2 mole percent.

The "monomer unit" such as the above-mentioned minor constituent monomer-derived unit as so referred to herein is a part of the molecular structure of the fluoropolymer and is a part derived from the corresponding monomer. For example, the TFE unit is a part of the molecular structure of the fluoropolymer and is a unit derived from TFE and is presented by -(CF₂CF₂)-. The "all monomer units" mentioned above includes all monomer-derived parts constituting the molecular structure of the fluoropolymer. The term "minor constituent monomer unit content (mole percent) relative to all the monomer units" as used herein means the mole fraction (mole percent) of the minor constituent monomer(s) from which the minor constituent monomer unit(s) is(are) derived relative to the monomers from which the above-mentioned "all monomer units" are derived, namely the total amount of the monomers constituting the fluoropolymer.

As the melt-processable fluoropolymer, there may be mentioned, for example, CTFE/TFE copolymers, ethylene/TFE copolymers [ETFE], TFE/HFP copolymers [FEP], TFE/PPVE copolymers [PFA], TFE/perfluoro(alkyl vinyl ether) copolymers [PFA, MFA, etc.] and like TFE polymers.

As the elastomeric copolymer, there may be mentioned TFE/propylene copolymers, HFP/ethylene/TFE copolymers, VDF/TFE/HFP copolymers and like TFE polymers; HFP/ethylene copolymers, PVDF, VDF/HFP copolymers, HFP/ethylene copolymers and so forth.

Preferred as the fluoropolymer are TFE polymers from the good thermal stability viewpoint, among others. From the good thermal stability and good electrical characteristics viewpoint, perfluoropolymers are also preferred, and PTFE and modified PTFE species, which are non-melt-processable fluoropolymers, are more preferred.

The number average molecular weight of the fluoropolymer is not particularly restricted.

In the case of the non-melt-processable fluoropolymer, the number average molecular weight can be adjusted to about 200 to about 2000 x 10⁹ as calculated based on the standard specific gravity [SSG] and, in the case of the melt-processable fluoropolymer and elastomeric copolymer, it can be generally adjusted to 2000 to 1000000, preferably 5000 to 750000, more preferably 10000 to 500000, as determined by gel permeation chromatography [GPC] and expressed on the polystyrene equivalent basis when the polymer is soluble in a solvent, or as calculated from the melt flow rate value when the polymer is a solvent-insoluble one.

The "particle comprising the fluoropolymer" is not particularly restricted. From the moldability/processability viewpoint, however, particles having a core/shell structure such that the core phase and shell phase of each particle differ in copolymer composition and/or molecular weight of the constituent fluoropolymer. The boundary between the core phase and shell phase in the above-mentioned core/shell structure may be distinct or the fluoropolymers constituting such phases may show concentration gradients in the vicinity of the boundary between the phases. The shell phase may comprise one single layer or two or more layers.

The average primary particle diameter of the fluoropolymer particles is not particularly restricted.

The "average primary particle diameter" means the average particle diameter of particles comprising the fluoropolymer in the fluoropolymer aqueous dispersion as obtained by polymerization and not yet subjected to such an operation as dilution or concentration after the polymerization reaction and, in the case of the above-mentioned fluoropolymer, it is preferably 50 to 500 nm.

The average primary particle diameter, so referred to herein, is the value indirectly determined in the following manner. Using fluoropolymer aqueous dispersions as obtained by polymerization and having certain fluoropolymer solid concentrations, a working curve showing the relation between the transmittance, per unit length, of incident light at 550 nm and the average particle diameter determined by electron photomicrography is constructed, and the transmittance of the fluoropolymer aqueous dispersion, which is the measurement target, is measured in the same manner as mentioned above for comparison with the working curve.

The above-mentioned aqueous medium is not particularly restricted but may be any water-containing liquid. Thus, it may contain, in addition to water, a fluorine-free organic solvent such as an alcohol, ether, ketone or paraffin wax and/or a fluorine-containing organic solvent.

The fluorine-containing anionic surfactant in the fluoropolymer aqueous dispersion of the invention is not particularly restricted but may be any fluorine-containing anionic surfactant known in the art.

Preferably, however, the fluorine-containing anionic surfactant comprises a fluorine-containing carboxylic acid compound and/or a fluorine-containing sulfonic acid compound, among others; more preferably, it comprises a perfluorocarboxylic acid compound and/or a perfluorosulfonic acid compound, still more preferably, it comprises a perfluorocarboxylic acid compound containing 6 to 12 carbon atoms and/or a perfluorosulfonic acid compound containing 6 to 12 carbon atoms and, more preferably, it comprises a perfluorocarboxylic acid compound containing 6 to 12 carbon atoms.

As the fluorine-containing anionic surfactant mentioned above, there may be mentioned, for example, ones comprising a perfluorocarboxylic acid (I) represented by the general formula (1) given below, an ω-hydroperfluorocarboxylic acid (II) represented by the general formula (2) given below, a perfluoropolyethercarboxylic acid (III) represented by the general formula (III) represented by the general formula (3) given below, a perfluoroalkylalkylenecarboxylic acid (IV) represented by the general formula (4) given below, a perfluoroalkoxyfluorocarboxylic acid (V) represented by the general formula (5) given below, a perfluoroalkylsulfonic acid (VI) represented by the general formula (6) given below and/or a perfluoroalkylalkylenesulfonic acid (VII) represented by the general formula (7) given below.

The fluorine-containing anionic surfactant may comprise one or two or more of the compounds (I) to (VII) mentioned above, and the compounds (I) to (VII) each may comprise one single species or two or more species.

The perfluorocarboxylic acid (I) is represented by the general formula (1):

F(CF₂)ₙ₁COOM (1)

wherein n1 is an integer of 3 to 6 and M is H, HN₄ or an alkali metal element.

In the above general formula (1), M is preferably NH₄ in view of the fact that, then, the surfactant hardly remains in particle comprising the fluoropolymer on the occasion of processing of the fluoropolymer aqueous dispersion obtained.

Preferred as the perfluorocarboxylic acid (I) are, for example, F(CF₂)₆COONH₄ and F(CF₂)₅COONH₄.

The ω-hydroperfluorocarboxylic acid (II) is represented by the general formula (2):

H(CF₂)ₙ₂COOM (2)

wherein n2 is an integer of 4 to 8 and M is as defined above.

From the polymerization reaction stability viewpoint, n2 in the above generaloformula (2) is preferably 5 or 6. M is preferably NH₄ in view of the fact that, then, the surfactant hardly remains in the particle comprising the fluoropolymer on the occasion of processing of the fluoropolymer aqueous dispersion obtained.

Preferred as the ω-hydroperfluorocarboxylic acid (II) are, for example, H(CF₂)₈COOM, H(CF₂)₇COOM, H(CF₂)₆COOM and H(CF₂)₅COOM (in each formula, M being as defined above).

The perfluoropolyethercarboxylic acid (III) is represented by the general formula (3):

Rf¹-O-(CF(CF₃)CF₂O)ₙ₃CF(CF₃)COOM (3)

wherein Rf¹ is a perfluoroalkyl group containing 1 to 5 carbon atoms, n3 is an integer of 0 to 3 and M is as defined above.

In the above general formula (3), Rf¹ is preferably a perfluoroalkyl group containing not more than 4 carbon atoms from the viewpoint of stability in polymerization, n3 is preferably 0 or 1, and M is preferably NH₄ in view of the fact that, then, the surfactant hardly remains in the particle comprising the fluoropolymer on the occasion of processing of the fluoropolymer aqueous dispersion obtained.

Preferred as the perfluoropolyethercarboxylic acid (III) are, for example, C₄F₉OCF(CF₃)COOM, C₃F₇OCF(CF₃)COOM, CF₃OCF(CF₃)CF₂OCF(CF₃)COOM (in each formula, M being as defined above). In view of good stability in polymerization and good removal efficiency, CF₃OCF(CF₃)CF₂OCF(CF₃)COOM (M being as defined above) and the like are more preferred.

The perfluoroalkylalkylenecarboxylic acid (IV) is represented by the general formula (4):

Rf²(CH₂)ₙ₄Rf³COOM (4)

wherein Rf² is a perfluoroalkyl group containing 1 to 5 carbon atoms, Rf³ is a straight or branched perfluoroalkylene group containing 1 to 3 carbon atoms, n4 is an integer of 1 to 3 and M is as defined above.

In the above general formula (4), the group Rf² is preferably a perfluoroalkyl group containing not less than 2 carbon atoms or a perfluoroalkyl group containing not more than 4 carbon atoms. The group Rf³ is preferably a perfluoroalkylene group containing 1 or 2 carbon atoms and more preferably is -(CF₂)- or -CF(CF₃)-. The integer n4 is preferably 1 or 2 and more preferably is 1. The moiety M is preferably NH₄ in view of the fact that, then, the surfactant hardly remains in the particle comprising the fluoroplymer on the occasion of processing of the fluoropolymer aqueous dispersion obtained.

Preferred as the perfluoroalkylalkylenecarboxylic acid (V) are, for example, C₄F₉CH₂CF₂COOM, C₃F₇CH₂CF₂COOM, C₄F₉CH₂CF(CF₃)COOM, C₃F₇CH₂CF(CF₃)COOM, C₂F₅CH₂CF(CF₃)COOM, C₄F₉CH₂CH₂CF₂COOM, C₃F₇CH₂CH₂CF₂COOM and C₂F₅CH₂CH₂CF₂COOM (in each formula, M being as defined above).

The perfluoroalkoxyfluorocarboxylic acid (V) is represented by the general formula (5):

Rf⁴-O-CY¹Y²CF₂-COOM (5)

wherein Rf⁴ is a perfluoroalkyl group containing 1 to 5 carbon atoms, Y¹ and Y¹ are the same or different and each is H or F and M is as defined above.

In the above general formula (5), the group Rf⁴ is preferably a perfluoroalkyl group containing 3 carbon atoms from the polymerization stability viewpoint. The moiety M is preferably NH₄ in view of the fact that, then, the surfactant hardly remains in the particle comprising the fluoropolymer on the occasion of processing of the fluoropolymer aqueous dispersion obtained.

Preferred as the perfluoroalkoxyfluorocarboxylic acid (V) are C₃F₇OCH₂CF₂COOM, C₃F₇OCHFCF₂COOM and C₃F₇OCF₂CF₂COOM (in each formula, M being as defined above), for instance.

The perfluoroalkylsulfonic acid (VI) is represented by the general formula (6):

F(CF₂)ₙ₅SO₃M (6)

wherein n5 is an integer of 3 to 6 and M is as defined above.

In the above general formula (6), the moiety M is preferably NH₄ in view of the fact that, then, the surfactant hardly remains in the particle comprising the fluoropolymer on the occasion of processing of the fluoropolymer aqueous dispersion obtained.

The perfluoroalkylalkylenesulfonic acid (VII) is represented by the general formula (7):

Rf⁵(CH₂)ₙ₆SO₃M (7)

wherein Rf⁵ is a perfluoroalkyl group containing 1 to 5 carbon atoms, n6 is an integer of 1 to 3 and M is as defined above.

In the above general formula (7), the integer n6 is preferably 1 or 2, more preferably 1. The moiety M is preferably NH₄ in view of the fact that, then, the surfactant hardly remains in the particle comprising the fluoropolymer on the occasion of processing of the fluoropolymer aqueous dispersion obtained.

The fluorine-containing anionic surfactant mentioned above more preferably comprises the perfluorocarboxylic acid (I), ω-hydroperfluorocarboxylic acid (II), perfluoropolyethercarboxylic acid (III), perfluoroalkylalkylenecarboxylic acid (IV) and/or perfluoroalkoxyfluorocarboxylic acid (V), still more preferably comprises the perfluorocarboxylic acid (I), ω-hydroperfluorocarboxylic acid (II) and/or perfluoropolyethercarboxylic acid (III). The NH₄ salt form is particularly preferred among others.

The supernatant for assaying as obtained from the fluoropolymer aqueous dispersion of the invention has a fluorine-containing anionic surfactant concentration of not higher than 100 ppm.

The term "supernatant for assaying" as used herein means the transparent phase formed as an upper layer upon subjecting the fluoropolymer aqueous dispersion of the invention or the pretreatment fluoropolymer aqueous dispersion to be described later herein to centrifugation at 25°C and at a gravitational acceleration of 1677G. In the present specification, the above-mentioned supernatant for assaying is one obtained by centrifugation under the above-specified conditions and, in this respect, is conceptually different from the "supernatant" resulting from the concentration operation performed in carrying out the method of producing the fluoropolymer aqueous dispersion according to the invention, which method is to be described later herein, or resulting from the concentration operation carried out in preparing the pretreatment fluoropolymer aqueous dispersion. The supernatant for assaying can be prepared, for example, by carrying out centrifugation under the above-mentioned conditions for at least 30 minutes using a centrifuge tube with a diameter of about 35 mm and a length of about 100 mm.

The fluorine-containing anionic surfactant content in the supernatant for assaying is preferably not higher than 50 ppm and more preferably not higher than 25 ppm.

The fluorine-containing anionic surfactant content, so referred to herein, is the value as determined by comparing the detected line (curve) obtained by carrying out HPLC of the supernatant for assaying with a working curve showing the relation between the fluorine-containing anionic surfactant concentration and the fluorine-containing anionic surfactant-due peak area as constructed by carrying out HPLC using aqueous solutions containing the fluorine-containing anionic surfactant at known concentrations.

Since the supernatant for assaying as derived from the fluoropolymer aqueous dispersion of the invention has a fluorine-containing anionic surfactant content of not higher than 100 ppm, the physical properties of the fluoropolymer will not be affected by the fluorine-containing anionic surfactant on the occasion of molding/processing and, therefore, the fluoropolymer aqueous dispersion of the invention serves as a particularly excellent raw material for fluoropolymer powders and fluoropolymer moldings, among others.

The above-mentioned nonionic surfactant in the fluoropolymer aqueous dispersion of the invention is not particularly restricted but the nonionic compound constituting the nonionic surfactant may be, for example, a polyoxyalkylene alkyl ether type nonionic compound or a polyoxyethylene alkylphenyl ether type nonionic compound. The above-mentioned nonionic compound is generally the reaction product obtained by causing an epoxy compound containing 2 to 3 carbon atoms to add to an alcohol and, therefore, is supplied mainly in the form of a mass of molecules differing mainly in the number of moles of the epoxy compound added (hereinafter referred to as "number of oxyalkylene units") within a certain range. The term "nonionic compound" as used herein, unless otherwise specified, means such mass of molecules as mentioned above, and the term "nonionic compound molecule" as used herein means each individual molecule constituting the relevant "nonionic compound" which is a mass of molecules. When mention is made of the chemical structure of a "nonionic compound", the mean is referred to of the chemical structures of the respective "nonionic compound molecules" as a mass of the individual "nonionic compound molecules" constituting the "nonionic compound". In the present specification, the terms "nonionic compound" and "nonionic compound molecules" are sometimes modified by an explanatory term or phrase to specify the chemical structure thereof.

Preferred as the above-mentioned polyoxyalkylene alkyl ether type nonionic compound are, for example, compounds represented by the general formula (i):

R³-O-A¹-H (i)

wherein R³ is a straight or branched primary or secondary alkyl group containing 8 to 18 carbon atoms and A¹ is a polyoxyalkylene chain.

In the above general formula (i), R³ is preferably an alkyl group containing not less than 10 carbon atoms, more preferably an alkyl group containing not less than 12 carbon atoms, but preferably is an alkyl group containing not more than 16 carbon atoms, more preferably an alkyl group containing not more than 14 carbon atoms. As for the polyoxyalkylene chain A¹, the number of oxyalkylene units is preferably 5 to 18. The oxyalkylene unit may comprise oxyethylene and oxypropylene units. Preferably, however, it comprises oxyethylene units alone.

In the polyoxyalkylene alkyl ether type nonionic compound, R³ is preferably an alkyl group containing 10 to 13 carbon atoms and having a branched structure, and the number of oxyalkylene units is preferably 6 to 12.

Preferred as the above-mentioned polyoxyethylene alkylphenyl ether type nonionic compound are compounds represented by the general formula (ii):

R⁴-C₆H₄-O-A²-H (ii)

wherein R⁴ is a straight or branched primary or secondary alkyl group containing 4 to 12 carbon atoms and A² is a polyoxyalkylene group.

In the above general formula (ii), R⁴ is preferably an alkyl group containing not less than 5 carbon atoms, more preferably an alkyl group containing not less than 6 carbon atoms, but preferably is an alkyl group containing not more than 10 carbon atoms, more preferably an alkyl group containing not more than 8 carbon atoms. As for the polyoxyalkylene chain A², the number of oxyalkylene units is preferably 5 to 18, and a more preferred lower limit thereto is 6 and a more preferred upper limit is 12.

Preferred as the polyoxyethylene alkylphenyl ether type nonionic compound are, for example, Triton X-100 (trademark, product of Dow Chemical, HLB 13.5) and the like.

The above-mentioned nonionic surfactant may comprise one single nonionic compound or two or more nonionic compounds.

The above-mentioned supernatant for assaying, when subjected to high-performance liquid chromatography [HPLC] under the conditions of a flow rate of 1.0 ml/minute and a column temperature of 40°C using an acetonitrile/0.05 M aqueous solution of phosphoric acid mixture (60%/40% by volume) as a developing solution, followed by detection at an absorption wavelength at which the nonionic surfactant can be identified, shows a ratio between the total area (A⁰) under the detected line and the area (A¹) under the detected line over a retention time period shorter than 16 minutes, namely the ratio A¹/A⁰ (hereinafter sometimes referred to as "ratio A¹/A⁰" for short) of not lower than 0.4.

The ratio (A¹/A⁰) between the total area (A⁰) under the detected line and the area (A¹) under the detected line over a retention time period shorter than 16 minutes should be not lower than 0.4 so that the viscosity-temperature dependency may be reduced, and a preferred upper limit from the mechanical stability viewpoint is 0.6.

The detected line, so referred to herein, is expressed in a coordinate system where the ordinate denotes the absorbance and the abscissa denotes the retention time (minutes).

Generally used as the absorption wavelength at which the nonionic surfactant can be identified is the wavelength at which a maximum absorption is measured for the measurement target nonionic surfactant. In cases where this maximum absorption is overlapping with the absorption of another component in the fluoropolymer aqueous dispersion, for instance, the wavelength of another high-level absorption can be used. In the case of a benzene ring-containing nonionic surfactant, the absorption wavelength suited for identifying the nonionic surfactant is generally 252 nm in the ultraviolet region unless it overlaps with that of absorption of another component in the fluoropolymer aqueous dispersion. Generally, the absorbance becomes greater as the amount of the nonionic compound molecules eluted at each retention time increases.

The retention time mentioned above serves as an indicator of the degrees of hydrophilicity and oleophilicity of the nonionic compound molecules. Generally, the shorter the above-mentioned retention time is, the higher the hydrophilicity of the nonionic compound molecules is; the longer the retention time is, the higher the oleophilicity is. Therefore, the nonionic compound molecules (hereinafter sometimes referred to as "nonionic compound molecules (S^{H})") eluted at "a retention time period shorter than 16 minutes" when HPLC is carried out under the above-specified conditions are relatively high in hydrophilicity and are effective in dispersing the fluoropolymer stably and lowering the viscosity-temperature dependency of the fluoropolymer aqueous dispersion.

The above-mentioned "total area (A⁰) under the detected line" means the total area of the region between the detected line and the base line.

The above-mentioned "area (A¹) under the detected line" means the area of that portion found during a retention time period shorter than 16 minutes out of the "total area (A⁰) under the detected line".

Therefore, when the "ratio (A¹)/(A⁰) is not lower than 0.4", the supernatant for assaying is generally high in the content of nonionic compound molecules (S^{H}).

The fluoropolymer aqueous dispersion is preferably low in viscosity-temperature dependency and low in viscosity even at high temperatures, since, then, the workability is good and uniform film surfaces showing no cissing or crack can be obtained in performing molding/processing using the fluoropolymer aqueous dispersion in the manner of impregnation or wet-on-wet coating, for instance.

The fluoropolymer aqueous dispersion may generally be one obtained by subjecting the aqueous dispersion just after polymerization as obtained by polymerization to such an after-treatment as concentration to reduce the concentration of the fluorine-containing anionic surfactant remaining as the emulsifier for polymerization, for instance. On the occasion of such after-treatment, water is generally added in addition to a nonionic surfactant. On the occasion of the above-mentioned concentration reduction, the after-treatment mentioned above generally comprises the step of separation into a concentrated phase containing particles comprising the fluoropolymer and a supernatant phase comprising water and substantially free of particles comprising the fluoropolymer and, in that separation step, high-HLB nonionic compound molecules high in hydrophilicity, out of the nonionic compound molecules constituting the nonionic compound, migrate selectively into the supernatant phase and are removed in the step of removing the supernatant phase; as a result, the nonionic compound molecules remaining in the concentrated phase are low in HLB. The aqueous dispersion prepared from this concentrated phase by appropriate dilution, for instance, shows an extremely high viscosity-temperature dependency when the fluorine-containing anionic surfactant concentration in the above-mentioned supernatant for assaying as prepared therefrom becomes 100 ppm or lower. In the case of the conventional aqueous dispersions relatively high in fluorine-containing anionic surfactant content, this phenomenon matters little.

On the contrary, the supernatant for assaying as obtained from the fluoropolymer aqueous dispersion of the invention has a ratio (A¹/A⁰) of not lower than 0.4, as mentioned above, and contains nonionic compound molecules (S^{H}) which lower the viscosity-temperature dependency of the fluoropolymer aqueous dispersion. The fluoropolymer aqueous dispersion before the preparation of such supernatant for assaying is low in viscosity-temperature dependency.

Therefore, the fluoropolymer aqueous dispersion of the invention can maintain the viscosity thereof at low levels even upon temperature rises on the occasion of molding/processing; thus, the workability thereof can easily be reproduced even upon changes in working environment conditions, and uniform film surfaces showing no cissing or cracking can be obtained therefrom. That dispersion is also excellent in mechanical stability and is an excellent material for molding/processing. By saying "excellent in mechanical stability" herein, it is meant that even when the dispersion undergoes stresses caused by shearing, friction and stirring, for instance, the dispersion has the property of hardly forming aggregates incapable of being redispersed.

In the fluoropolymer aqueous dispersion of the invention, the above-mentioned nonionic surfactant preferably amounts to 5 to 15% by mass relative to the fluoropolymer solid matter.

From the mechanical stability viewpoint, a preferred lower limit to the nonionic surfactant concentration is 7% by mass of the fluoropolymer solid matter and, from the moldability/processability viewpoint, a preferred upper limit thereto is 12% by mass of the fluoropolymer solid matter.

The nonionic surfactant concentration, so referred to herein, is the value calculated from the loss in weight upon heating the residue obtained by drying the fluoropolymer aqueous dispersion at a pressure of -180 mm Hg and a temperature of 100°C for 1 hour from 25°C to 380°C by carrying out a differential thermal-thermogravimetric analysis using a differential thermal-thermogravimetric analyzer TG-DTA (Seiko RTG200).

The "fluoropolymer solid matter" so referred to herein is conceptually identical to the total amount of all fluoropolymer particles in the fluoropolymer aqueous dispersion.

The "fluoropolymer solid matter" so referred to herein is the value obtained by drying the fluoropolymer aqueous dispersion at a pressure of -180 mmHg and a temperature of 100°C for 1 hour and subjecting the residue obtained to differential thermal-thermogravimetric analysis using a differential thermal-thermogravimetric analyzer TG-DTA (Seiko RTG200). The value in question is determined as the loss in weight in the temperature range of 380 to 600°C.

The fluoropolymer aqueous dispersion preferably has a fluoropolymer solid matter concentration of 20 to 80% by mass. The fluoropolymer solid matter is the value obtained as the loss in weight within the temperature range of 380 to 600°C by subjecting the residue obtained by 1 hour of drying at 100°C and -180 mmHg to differential thermal-thermogravimetric analysis, as mentioned above.

From the moldability/processability viewpoint, a preferred lower limit to the fluoropolymer solid matter concentration is 30% by mass, a more preferred lower limit is 40% by mass and a still more preferred lower limit is 50% by mass. From the mechanical stability viewpoint, a preferred upper limit to the fluoropolymer solid matter concentration is 75% by mass, and a more preferred upper limit is 70% by mass.

The fluoropolymer aqueous dispersion of the invention preferably has an electrolyte concentration of 0.05 µS/cm to 10 mS/cm.

From the viscosity-temperature dependency reduction viewpoint, the above-mentioned electrolyte concentration is more preferably not lower than 1 µS/cm, still more preferably not lower than 10 µS/cm and, from the mechanical stability viewpoint, it is more preferably not higher than 8 mS/cm, still more preferably not higher than 5 mS/cm.

The electrolyte concentration so referred to herein is the value measured using an electric conductivity meter which utilizes the relation between potential difference and electric conductivity as found when a constant current is passed therethrough, for example a model CM-40 conductivity meter (product of Toa Dempa Kogyo).

As the electrolyte, there may be mentioned, for example inorganic acid, organic acids, and inorganic or organic acid salts. Examples of the inorganic acids are nitric acid, sulfuric acid and hydrochloric acid, and examples of the organic acids are formic acid, acetic acid, oxalic acid and succinic acid. The salts are sodium, potassium, aluminum, magnesium and zinc salts, among others.

When the fluoropolymer aqueous dispersion of the invention is used as a binder for semiconductors or such cells as fuel cells and lithium ion secondary cells, the electrolyte concentration is preferably not higher than 500 µS/cm and, for use as a coating material, the electrolyte concentration is preferably 0.5 to 5 mS/cm.

Since the electrolyte concentration thereof is within the range mentioned above, the fluoropolymer aqueous dispersion of the invention is excellent in compatibility with additives in preparing coating compositions, for instance, and can give uniform surfaces and, further, is low in viscosity-temperature dependency, hence can be molded/processed with ease.

The method of producing a fluoropolymer aqueous dispersion according to the invention comprises adding a nonionic surfactant (B) to a pretreatment fluoropolymer aqueous dispersion containing a nonionic surfactant (A) to give the above-mentioned fluoropolymer aqueous dispersion of the invention.

The pretreatment fluoropolymer aqueous dispersion contains the nonionic surfactant (A) to be described later herein.

When it contains the nonionic surfactant (A), the pretreatment fluoropolymer aqueous dispersion may be an aqueous dispersion as obtained by polymerization for obtaining the fluoropolymer in the fluoropolymer aqueous dispersion or may be an aqueous dispersion obtained by subjecting the aqueous dispersion as obtained after polymerization once or two or more times to after-treatment such as concentration and dilution, which is carried out in the conventional manner. Preferably, however, it is one obtained by subjecting the aqueous dispersion as obtained after polymerization twice or more times to a concentration operation.

As the concentration operation, there may be mentioned such techniques known in the art as ultrafiltration concentration, ion exchange concentration, phase separation concentration, and electric concentration. Each concentration technique can be carried out according to the well-known operation under the conditions known in the art.

In view of the good efficiency in removing the fluorine-containing anionic surfactant to be described later herein, the phase separation concentration technique and/or electric concentration technique is preferred, and the phase separation concentration is more preferred.

To carry out the above-mentioned concentration operation "once" means that the whole amount of the pretreatment fluoropolymer aqueous dispersion before concentration treatment is subjected to concentration operation. For example, when the pretreatment fluoropolymer aqueous dispersion before concentration treatment amounts to x¹ liters, the operation by which the whole amount of x¹ liters is subjected, as the primary concentration target material, to concentration operation constitutes the first concentration operation, and the operation by which the concentrate obtained by that first concentration operation is supplemented with water, a surfactant, etc. according to need so as to amount to x² liters and the whole amount (x² liters) of the resulting secondary concentration target material is subjected to concentration operation constitutes the second concentration operation. In this manner, the n-th concentration target material amounting to xⁿ liters comes from the x¹ liters of the primary concentration target material and, in this respect, it is to be construed that "the whole amount of the pretreatment fluoropolymer aqueous dispersion before concentration treatment is subjected to concentration operation" in the n-th concentration operation as well.

In the first concentration operation in which the target material in the concentration operation is the above-mentioned "pretreatment fluoropolymer aqueous dispersion before concentration treatment", the above-mentioned "whole amount of the pretreatment fluoropolymer aqueous dispersion before concentration treatment" is the very whole amount of the "pretreatment fluoropolymer aqueous dispersion", namely the x¹ liters of the primary concentration target material and, in the case of the n-th concentration operation by which the concentrate obtained by the (n - 1)th concentration operation is the concentration target material, that "whole amount" is the amount resulting from adding water, a surfactant, etc. according to need to that concentrate, namely the xⁿ liters of the n-th concentration target material mentioned above.

When it is obtained by carrying out a concentration operation twice or more times, the pretreatment fluoropolymer aqueous dispersion may be one obtained by repeating the same concentration method, or one obtained by a combination of two or more concentration techniques, or one obtained by continuously carrying out a concentration operation or operations.

In the production method of the invention, the supernatant for assaying as obtained by centrifuging the above-mentioned pretreatment fluoropolymer aqueous dispersion at 25°C and at a gravitational acceleration of 1677G for 30 minutes has a fluorine-containing anionic surfactant concentration of not higher than 100 ppm.

The fluorine-containing anionic surfactant is not particularly restricted but preferably includes those described referring to the fluoropolymer aqueous dispersion of the invention in view of their good dispersing power.

In the production method of the invention, the above-mentioned fluorine-containing anionic surfactant may be the one to be present in a polymerization for obtaining the fluoropolymer in the aqueous medium, the one added on the occasion of carrying out the concentration operation following the polymerization and/or the one added after carrying out the concentration operation.

The above-mentioned nonionic surfactant (A) has an HLB of 12 to 14. The nonionic surfactant (A) is not particularly restricted but may be any one having an HLB within the above range, preferably one comprising a polyoxyalkylene alkyl ether-based nonionic compound(s) represented by the general formula (i) given hereinabove and/or a polyoxyethylene alkylphenyl ether-based nonionic compound(s) represented by the general formula (ii) given hereinabove.

The HLB so referred to herein is the value calculated using Griffin's calculation formula given later herein in the examples section.

The nonionic surfactant (A) is generally added for the purpose of concentration for preparing the pretreatment fluoropolymer aqueous dispersion or for the purpose of stabilization of the fluoropolymer aqueous dispersion on the occasion of carrying out such a operation as ultrafiltration concentration, ion exchange concentration, phase separation concentration or electric concentration, which is carried out for the purpose of preparing the pretreatment fluoropolymer aqueous dispersion by concentration or for the purpose of removing the fluorine-containing anionic surfactant.

When ultrafiltration concentration, ion exchange concentration or electric concentration is carried out for preparing the pretreatment fluoropolymer aqueous dispersion, the concentration of the nonionic surfactant (A) in the pretreatment fluoropolymer aqueous dispersion is preferably not lower than 1 part by mass, more preferably not lower than 2 parts by mass, but preferably not higher than 10 parts by mass, more preferably not higher than 5 parts by mass, per 100 parts by mass of the fluoropolymer solid matter contained in the pretreatment fluoropolymer aqueous dispersion.

When phase separation concentration is carried out for preparing the pretreatment fluoropolymer aqueous dispersion, the above-mentioned concentration is preferably not lower than 5 parts by mass, more preferably not lower than 10 parts by mass, but preferably not higher than 50 parts by mass, more preferably not higher than 25 parts by mass, per 100 parts by mass of the fluoropolymer solid matter contained in the pretreatment fluoropolymer aqueous dispersion.

The method of producing the fluoropolymer aqueous dispersion according to the invention comprises adding a nonionic surfactant (B) to the above-mentioned pretreatment fluoropolymer aqueous dispersion.

The nonionic surfactant (B) has an HLB of 13 to 15. The nonionic surfactant (B) is not particularly restricted but may be any one having an HLB within the above range. Thus, it may comprise nonionic compound molecules of the same kind as that in the above-mentioned nonionic surfactant (A) or may comprise nonionic compound molecules different in kind.

The nonionic surfactant (B) preferably comprise a polyoxyalkylene alkyl ether type nonionic compound (s) represented by the general formula (i) given hereinabove and/or a polyoxyethylene alkylphenyl ether type nonionic compound(s) represented by the general formula (ii) given hereinabove and/or the like.

In the method of producing the fluoropolymer according to the invention, the nonionic surfactant (B) may be added once or twice or more times.

When the nonionic surfactant (B) is added twice or more times, the addition of the nonionic surfactant (B) and the above mentioned concentration operation may be carried out alternately, or the operation for adding the nonionic surfactant (B) may be repeated intermittently or continuously during the whole concentration operation.

The addition of the nonionic surfactant (B) in the method of producing the fluoropolymer according to the invention may be made at any time, thus before, during or after carrying out the above-mentioned concentration operation once; it may be carried out only one occasion among these occasions of addition or in combination of two or more occasions.

The addition of the nonionic surfactant (B) is preferably carried out so that the total mass of the nonionic surfactant (A) and nonionic surfactant (B) may amount to 5 to 15 parts by mass per 100 parts by mass of the fluoropolymer solid matter in the fluoropolymer aqueous dispersion obtained.

In the method of producing the fluoropolymer aqueous dispersion according to the invention, an electrolyte is preferably added further to the pretreatment fluoropolymer aqueous dispersion so that the fluoropolymer aqueous dispersion obtained may show high storage stability, occur stably and be low in viscosity-temperature dependency.

As the electrolyte, there may be mentioned the same ones as described hereinabove referring to the fluoropolymer aqueous dispersion of the invention.

One or two or more electrolyte species can be added to the pretreatment fluoropolymer aqueous dispersion.

The electrolyte is preferably added in an amount so that the concentration thereof in the fluoropolymer aqueous dispersion obtained may amount to 0.05 µS/cm to 10 mS/cm.

For the purpose of improving the storage stability of the fluoropolymer aqueous dispersion obtained, the above-mentioned electrolyte is preferably added so that the concentration thereof may amount to not lower than 1 µS/cm, more preferably not lower than 10 µS/cm and, for the purpose of preventing the fluoropolymer aqueous dispersion obtained from undergoing aggregation, it is preferably added so that the concentration thereof may amount to not higher than 8 mS/cm, more preferably not higher than 5 mS/cm.

The addition of the above electrolyte may be made before addition of the nonionic surfactant (B), on the occasion of adding the nonionic surfactant (B) and/or after addition of the nonionic surfactant (B).

The fluoropolymer powder of the invention is the one obtained by drying a wet powder obtained from the above-mentioned fluoropolymer aqueous dispersion.

The above-mentioned wet powder is generally the one obtained by subjecting the above-mentioned fluoropolymer aqueous dispersion to aggregation or flocculation.

The aggregation is generally effected by diluting the fluoropolymer aqueous dispersion of the invention with water so that the fluoropolymer solid matter may generally amount to 10 to 20% by mass and, after adjustment of the pH to neutrality or alkalinity, if necessary, vigorously stirring the dilution using, for example, a vessel equipped with a stirrer.

The above aggregation may also be carried out with stirring while adding, as a coagulant, a water-soluble organic compound such as methanol or acetone, an inorganic salt such as potassium nitrate or ammonium carbonate, or an inorganic acid such as hydrochloric acid, sulfuric acid or nitric acid, for instance.

It is also possible to obtain a pigment- or filler-containing fluoropolymer fine powder with the pigment or filler uniformly dispersed therein by adding a pigment for coloration and/or any of various fillers for improving the mechanical properties before or during coagulation and thus causing coaggregation.

The above aggregation may be carried out continuously using in-line mixers or the like.

The drying of the wet powder obtained by the above aggregation is generally carried out in a condition not allowing the wet powder to be much fluidized, preferably in a state of standing still, under such conditions as vacuum, high frequency irradiation, exposure to hot air, etc.

The above drying is generally carried out at a drying temperature of 10 to 250°C, preferably 100 to 200°C.

The fluoropolymer powder of the invention generally has an average particle diameter of 50 to 1000 µm. A preferred lower limit to the average particle diameter is 100 µm from the moldability/processability viewpoint, and a preferred upper limit is 700 µm.

The average particle diameter of the fluoropolymer particles, so referred to herein, is the value calculated from a scanning electron photomicrograph.

The fluoropolymer powder of the invention, which is obtained from the fluoropolymer aqueous dispersion of the invention, has good moldability/processability and is useful, for example, as a raw material for fluoropolymer moldings excellent in mechanical stability and other physical properties.

The fluoropolymer powder of the invention is particularly preferred for molding purposes, and the appropriate fields of application thereof include pneumatic system and fuel system tubes or the like for use in aircrafts, automobiles and the like, and flexible hoses for transporting chemical liquids, vapor and the like, and electric wire coverings.

The fluoropolymer molding of the invention is obtained by molding/processing the fluoropolymer aqueous dispersion of the invention or the fluoropolymer powder of the invention to.

The "molding/processing", so referred to herein, is not particularly restricted but may consist in any of pellet manufacture, molding manufacture, coating processing, impregnation, and cast film formation. The fluoropolymer molding of the invention may be in any of the forms of pellets, moldings, coatings, films or layers resulting from impregnation, and cast films.

The molding/processing can be appropriately carried out using those techniques known in the art.

Among the above-mentioned methods of molding/processing, the pellet manufacturing method is not particularly restricted but may be, for example, the method of manufacturing pellets which comprises feeding the fluoropolymer powder of the invention to a kneader or extruder, followed by melt-kneading to manufacture pellets.

The method of producing the moldings is not particularly restricted but, for example, mention may be made of compression molding, extrusion molding, paste extrusion molding, and injection molding.

The method of coating processing is not particularly restricted but may be any method of forming a fluoropolymer coating on a coating target article or substrate. Thus, for example, there may be mentioned the method comprising applying a powder coating composition comprising the fluoropolymer powder mentioned above, or the fluoropolymer aqueous dispersion mentioned above, to a substrate. The technique of application is not particularly restricted but includes, among others, spray coating, dip coating, brushing coating, and electrostatic coating.

As a method of impregnation, there may be mentioned, for example, the method comprising immersing a porous body with the fluoropolymer aqueous dispersion, followed by drying and sintering.

As a method of cast film formation, there may be mentioned, for example, the method comprising applying the dispersion to a substrate, followed by drying and, if desired, further followed by peeling off the thus-obtained coat film from the substrate by placing in water, for instance.

The molding/processing conditions can be adequately selected according to the technique of molding/processing employed, the composition and amount of the fluoropolymer to be molded or processed, and other factors.

The fluoropolymer molding of the invention is obtained from the fluoropolymer aqueous dispersion of the invention or from the fluoropolymer powder of the invention and is, therefore, excellent in surface characteristics, mechanical characteristics and other physical properties.

### EFFECTS OF THE INVENTION

The fluoropolymer aqueous dispersion of the invention, which has the constitution described hereinabove, is low in viscosity-temperature dependency, excellent in moldability/processability and mechanical stability and can give fluoropolymer moldings having good surface characteristics and mechanical characteristics.

The method of producing the fluoropolymer aqueous dispersion according to the invention, which has the constitution described hereinabove, can produce fluoropolymer aqueous dispersion low in viscosity-temperature dependency and excellent in moldability/processability and mechanical stability in a simple and efficient manner.

The fluoropolymer powder of the invention, which has the constitution described hereinabove, is excellent in moldability/processability. The fluoropolymer molding of the invention, which has the constitution described above, is excellent in surface characteristics, mechanical characteristics and other physical properties.

### BEST MODES FOR CARRYING OUT THE INVENTION

The following examples and comparative examples illustrate the present invention in further detail. These examples and comparative examples are, however, by no means limitative of the scope of the present invention.

The measurements made in the examples and comparative examples were performed by the following methods.
(1) Average molecular weight of the fluoropolymer
   Calculated from the standard specific gravity [SSG] measured according to ASTM D 1457-69.
(2) Average particle diameter of the fluoropolymer
   Indirectly determined by constructing a working curve showing the relation between the transmittance, per unit length, of incident light at 550 nm and the average particle diameter calculated from electron photomicrographic data using fluoropolymer aqueous dispersions diluted to a fluoropolymer solid matter concentration of 0.0015% by mass and comparing the transmittance measured in the same manner as mentioned above for the measurement target fluoropolymer aqueous dispersion with that working curve.
(3) Fluoropolymer solid matter
   Determined as the loss in weight in the temperature range of 380 to 600°C as measured by subjecting the residue obtained by drying the fluoropolymer aqueous dispersion obtained at 100°C and -180 mmHg for 1 hour to differential thermal-thermogravimetric analysis using a differential thermal-thermogravimetric analyzer TG-DTA (Seiko RTG200).
(4) Viscosity
   Using a Brookfield viscometer (product of Brookfield) with a rotor #2, viscosities were measured at temperatures of 25, 30, 35, 40 and 45°C at a revolving speed of 60 rpm.
(5) HLB value
   Calculated from Griffin's calculation formula [HLB = E/5 (where E is the weight percent of ethylene oxide in the molecule) ; HLB = (E + P)/5 (where E is as defined above and P is the weight percent of the polyhydric alcohol in the molecule); HLB = 20(1 - S/N) /5 (where S is the saponification value of the ester and N is the neutralization value of the ester-constituting fatty acid)].
(6) Electrolyte concentration
   Measurements were made at room temperature using a model CM-40 conductivity meter (product of Toa Dempa).
(7) Nonionic surfactant concentration
   Calculated from the loss in weight in the temperature range of 25 to 380°C as found by subjecting the residue obtained by 1 hour of drying at -180 mmHg and 100°C to differential thermal-thermogravimetric analysis using a differential thermal-thermogravimetric analyzer TG-DTA (Seiko RTG200).
(8) (A¹/A⁰) ratio
   For the contents of nonionic compound molecules in the supernatant for assaying derived from the measurement target, HPLC was carried out under the conditions of column: ODS 120A (Tosoh), developing solution: acetonitrile/0.05 M aqueous solution of phosphoric acid = 60/40 (% by volume/% by volume), flow rate: 1.0 ml/minute, sample size: 20 µL, column temperature: 40°C and detector: UV 252 nm, and the ratio was calculated from the absorbance values for the respective retention times (in minutes).
(9) Fluorine-containing anionic surfactant concentration
   Aqueous solutions having a fluorine-containing anionic surfactant concentration of 10 ppm, 100 ppm or 500 ppm were subjected to HPLC under the conditions of column: ODS 120A (Tosoh), developing solution: acetonitrile/0.05 M aqueous solution of phosphoric acid = 60/40 (% by volume/% by volume), flow rate: 1.0 ml/minute, sample size: 20 µL, column temperature: 40°C and detector: UV 210 nm, and a working curve was constructed using the respective fluorine-containing anionic surfactant concentrations and the peak areas for the respective fluorine-containing anionic surfactants.

The supernatant for assaying derived from the measurement target was subjected to HPLC under the same conditions as mentioned above, and the concentration in question was determined from the fluorine-containing anionic surfactant peak area obtained referring to the above working curve. The assay limit is 5 ppm.

### Example 1

A TFE polymer aqueous dispersion comprising a core/shell TFE polymer (I) (number average molecular weight 6000000, average primary particle diameter 280 nm) having a double layer structure comprising the core of a TFE/CTFE copolymer (PTFE modified with 0.12% by mass of CTFE units) and the shell of a TFE/PPVE copolymer (PTFE modified with 0.03% by mass of PPVE units) was adjusted to pH 9 by addition of 0.07 g of 28% (by mass) aqueous ammonia, water and Triton X-100 (product of Dow Chemical) as the nonionic surfactant (A) were added each in an amount given in Table 1 in each procedure, the mixture was then stirred gently at a temperature of 70°C for 6 hours and then allowed to stand to separate into two layers, and the supernatant layer out of them was removed. This procedure was repeated three times in all. The thus-obtained pretreatment fluoropolymer aqueous dispersion was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of 90 ppm. Then, Triton X-100 was added as the nonionic surfactant (B) so that the total nonionic surfactant mass might amount, after preparation, to 6.0% by mass of the TFE polymer (I) solid matter, whereby a TFE polymer aqueous dispersion with a TFE polymer (I) solid matter content of 60% by mass was obtained. Further, the TFE polymer aqueous dispersion obtained was placed in a centrifuge tube with a diameter of 35 mm and a length of 100 mm and centrifuged at 25°C and at a gravitational acceleration of 1677G for 30 minutes, and the transparent phase formed as a upper layer was recovered to give a supernatant for assaying.

The TFE polymer aqueous dispersion obtained was subjected to viscosity measurements within the range of 25 to 45°C, and the supernatant for assaying as obtained from the TFE polymer aqueous dispersion was measured for the nonionic surfactant content, fluorine-containing anionic surfactant concentration and ratio (A¹/A⁰).

### Example 2

The same TFE polymer aqueous dispersion comprising the TFE polymer (I) as used in Example 1 was adjusted to pH 9 by adding 0.07 g of 28% (by mass) aqueous ammonia, water and Triton X-100 as the nonionic surfactant (A) were added each in an amount given in Table 1 in each procedure, the mixture was then stirred gently at a temperature of 70°C for 6 hours and then allowed to stand to separate into two layers, and the supernatant layer out of them was removed. This procedure was repeated three times in all. The thus-obtained pretreatment fluoropolymer aqueous dispersion was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of 90 ppm. Then, the above-mentioned Triton X-100 was added as the nonionic surfactant (B) so that the total nonionic surfactant mass might amount, after preparation, to 6.0% by mass of the TFE polymer (I) solid matter, whereby a TFE polymer aqueous dispersion with a TFE polymer (I) solid matter content of 60% by mass was obtained. The TFE polymer aqueous dispersion obtained and the supernatant for assaying as prepared were subjected to various measurements in the same manner as in Example 1.

### Comparative Example 1

The same TFE polymer aqueous dispersion comprising the TFE polymer (I) as used in Example 1 was adjusted to pH 9 by adding 0. 07 g of 28% (by mass) aqueous ammonia, water and Triton X-100 (product of Dow Chemical) as the nonionic surfactant (A) were added each in an amount given in Table 1 in each procedure, the mixture was then stirred gently at a temperature of 70°C for 6 hours and then allowed to stand to separate into two layers, and the supernatant layer out of them was removed. This procedure was repeated three times in all. The thus-obtained pretreatment fluoropolymer aqueous dispersion was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of 150 ppm. Then, Triton X-100 was added as the nonionic surfactant (B) so that the total nonionic surfactant mass might amount, after preparation, to 6.0% by mass of the TFE polymer (I) solid matter, whereby a TFE polymer aqueous dispersion with a TFE polymer (I) solid matter concentration of 60% by mass was obtained. The TFE polymer aqueous dispersion obtained and the supernatant for assaying as prepared were subjected to various measurements in the same manner as in Example 1.

**[Table 1]**

| | | Example 1 | Example 2 | Comp. Ex. 1 |
|---|---|---|---|---|
| Aqueous dispersion before concentration | Total mass (g) | 69 | 69 | 69 |
| | TFE polymer (I) solid matter (g) | 24 | 24 | 24 |
| Nonionic surfactant (A) used | Species | TritonX-100 | TritonX-100 | TritonX-100 |
| | Addition level in each concentration procedure (based on TFE polymer (I) solid matter, % by mass) | 40 | 30 | 20 |
| First concentration | Amount of water added (g) | 11 | 11 | 11 |
| | Amount of nonionic surfactant (A) added (g) | 10 | 7 | 5 |
| | Supernatant after concentration (g) | 50 | 50 | 38 |
| | Concentrated phase (g) | 40 | 37 | 46 |
| | Amount of fluorine-containing anionic surfactant in supernatant (ppm) | 682 | 692 | 627 |
| Second concentration | Amount of water added (g) | 41 | 44 | 34 |
| | Amount of nonionic surfactant (A) added (g) | 9 | 6 | 4 |
| | Supernatant after concentration (g) | 54 | 49 | 46 |
| | Concentrated phase (g) | 35 | 38 | 38 |
| | Amount of fluorine-containing anionic surfactant in supernatant (ppm) | 106 | 116 | 265 |
| Third concentration | Amount of water added (g) | 45 | 42 | 42 |
| | Amount of nonionic surfactant (A) added (g) | 9 | 6 | 4 |
| | Supernatant after concentration (g) | 54 | 51 | 45 |
| | Concentrated phase (g) | 34 | 34 | 38 |
| | Amount of fluorine-containing anionic surfactant in supernatant (ppm) | 11 | 14 | 60 |

| | | | | |
|---|---|---|---|---|
| Referring to the concentrated phases in the second concentration and third concentration, water and the anionic surfactant (A) were added to the concentrated phase in the first concentration and to the concentrated phase in the second concentration, respectively. | | | | |

The results obtained in Examples 1 and 2 and comparative Example 1 are shown in Table 2.

**[Table 2]**

| | TFE polymer aqueous dispersion | | | | | | TFE polymer aqueous dispersion-derived supernatant for assaying | | |
|---|---|---|---|---|---|---|---|---|---|
| | Viscosity (cp) | | | | | TFE polymer (I) solid matter (g) | Ratio between areas under detected lines A¹/A⁰ | Fluorine-containing anionic surfactant concentration (ppm) | Nonionic surfactant concentration (relative to TFE polymer (I) solid matter, % by mass) |
| | 25°C | 30°C | 35°C | 40°C | 45°C | | | | |
| Example 1 | 18.5 | 17.8 | 19.6 | 25.9 | 42 | 60 | 0.50 | 75 | 6.0 |
| Example 2 | 20.4 | 21.4 | 26.7 | 45.1 | 74.8 | 60 | 0.55 | 75 | 6.0 |
| Comp. Ex. 1 | 24.2 | 32.3 | 51.7 | 100.6 | 129 | 60 | 0.35 | 135 | 6.0 |

| | | | | | | | | | |
|---|---|---|---|---|---|---|---|---|---|
| A⁰ = total area under detected line obtained by HPLC. A¹= area under detected line for retention time shorter than 16 minutes as obtained by HPLC. | | | | | | | | | |

The TFE polymer aqueous dispersion obtained in Comparative Example 1 showed rapid increases in viscosity between 25 to 45°C, whereas the temperature rise-due increases in viscosity were relative small with the TFE polymer aqueous dispersions obtained in Examples 1 and 2.

That the viscosity-temperature dependency of the TFE polymer aqueous dispersion varies with the concentration of the nonionic surfactant (A) added on the occasion of concentration is presumably due to the fact that when the level of addition of the nonionic surfactant (A) is low, the ratio (A¹/A⁰) of the supernatant for assaying as prepared from the TFE polymer aqueous dispersion obtained is lower than 0.4 and the content of the nonionic compound molecules (S^{H}) is low.

### Example 3

The same TFE polymer aqueous dispersion comprising the TFE polymer (I) as used in Example 1 was adjusted to pH 9 by adding 0 .07 g of 28% (by mass) aqueous ammonia, water and Triton X-100 as the nonionic surfactant (A) were added each in an amount given in Table 3 in each procedure, the mixture was then stirred gently at a temperature of 70°C for 6 hours and then allowed to stand to separate into two layers, and the supernatant layer out of them was removed. This procedure was repeated three times in all. Then, the nonionic surfactant (A) mentioned above was added to the aqueous dispersion obtained in an amount of 20% by mass relative to the TFE polymer solid matter mass, and the mixture was gently stirred at a temperature of 70°C for 6 hours. This procedure was carried out only once. The thus-obtained pretreatment fluoropolymer aqueous dispersion was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of lower than 5 ppm. Further, Triton X-100 was added as the nonionic surfactant (B) so that the total nonionic surfactant mass might amount, after preparation, to 6.9% by mass of the TFE polymer (I) solid matter, whereby a TFE polymer aqueous dispersion with a TFE polymer (I) solid matter concentration of 60% by mass was obtained.

The TFE polymer aqueous dispersion obtained and the supernatant for assaying as prepared were subjected to various measurements in the same manner as in Example 1.

### Example 4

The same TFE polymer aqueous dispersion comprising the TFE polymer (I) as used in Example 1 was adjusted to pH 9 by adding 0.07 g of 28% (by mass) aqueous ammonia, water and Triton X-100 as the nonionic surfactant (A) were added each in an amount given in Table 3 in each procedure, the mixture was then stirred gently at a temperature of 70°C for 6 hours and then allowed to stand to separate into two layers, and the supernatant layer out of them was removed. This procedure was repeated three times in all. Then, the nonionic surfactant (A) mentioned above was added to the aqueous dispersion obtained in an amount of 20% by mass relative to the TFE polymer solid matter, and the mixture was gently stirred at a temperature of 70°C for 6 hours and then allowed to stand to separate into two layers, followed by removal of the supernatant layer out of them (this procedure was carried out only once). The thus-obtained pretreatment fluoropolymer aqueous dispersion was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of lower than 5 ppm. Further, Triton X-102 (product of Dow Chemical, HLB 14.6) was added as the nonionic surfactant (B) so that the total nonionic surfactant mass might amount, after preparation, to 6.9% by mass of the TFE polymer (I) solid matter mass, whereby a TFE polymer aqueous dispersion with a TFE polymer (I) solid matter content of 60% by mass was obtained. The TFE polymer aqueous dispersion obtained and the supernatant for assaying as prepared were subjected to various measurements in the same manner as in Example 1.

### Comparative Example 2

The same TFE polymer aqueous dispersion comprising the TFE polymer (I) as used in Example 1 was adjusted to pH 9 by adding 0.07 g of 28% (by mass) aqueous ammonia, water and Triton X-100 as the nonionic surfactant (A) were added each in an amount given in Table 3 in each procedure, the mixture was then stirred gently at a temperature of 70°C for 6 hours and then allowed to stand to separate into two layers, and the supernatant layer out of them was removed. This procedure was repeated three times. Then, the nonionic surfactant (A) mentioned above was added to the aqueous dispersion obtained in an amount of 20% by mass relative to the TFE polymer solid matter, and the mixture was gently stirred at 70°C for 6 hours and then allowed to stand to separate into two layers, followed by removal of the supernatant layer out of them (this procedure was carried out only once). The thus-obtained pretreatment fluoropolymer aqueous dispersion was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of lower than 5 ppm. Further, Triton X-114 (product of Dow Chemical, HLB 12.4) was added as the nonionic surfactant (B) so that the total nonionic surfactant mass might amount, after preparation, to 6.9% by mass of the TFE polymer (I) solid matter mass, whereby a TFE polymer aqueous dispersion with a TFE polymer (I) solid matter content of 60% by mass was obtained. The TFE polymer aqueous dispersion obtained and the supernatant for assaying as prepared were subjected to various measurements in the same manner as in Example 1.

The results obtained in Examples 3 and 4 and Comparative Example 2 are shown in Table 4.

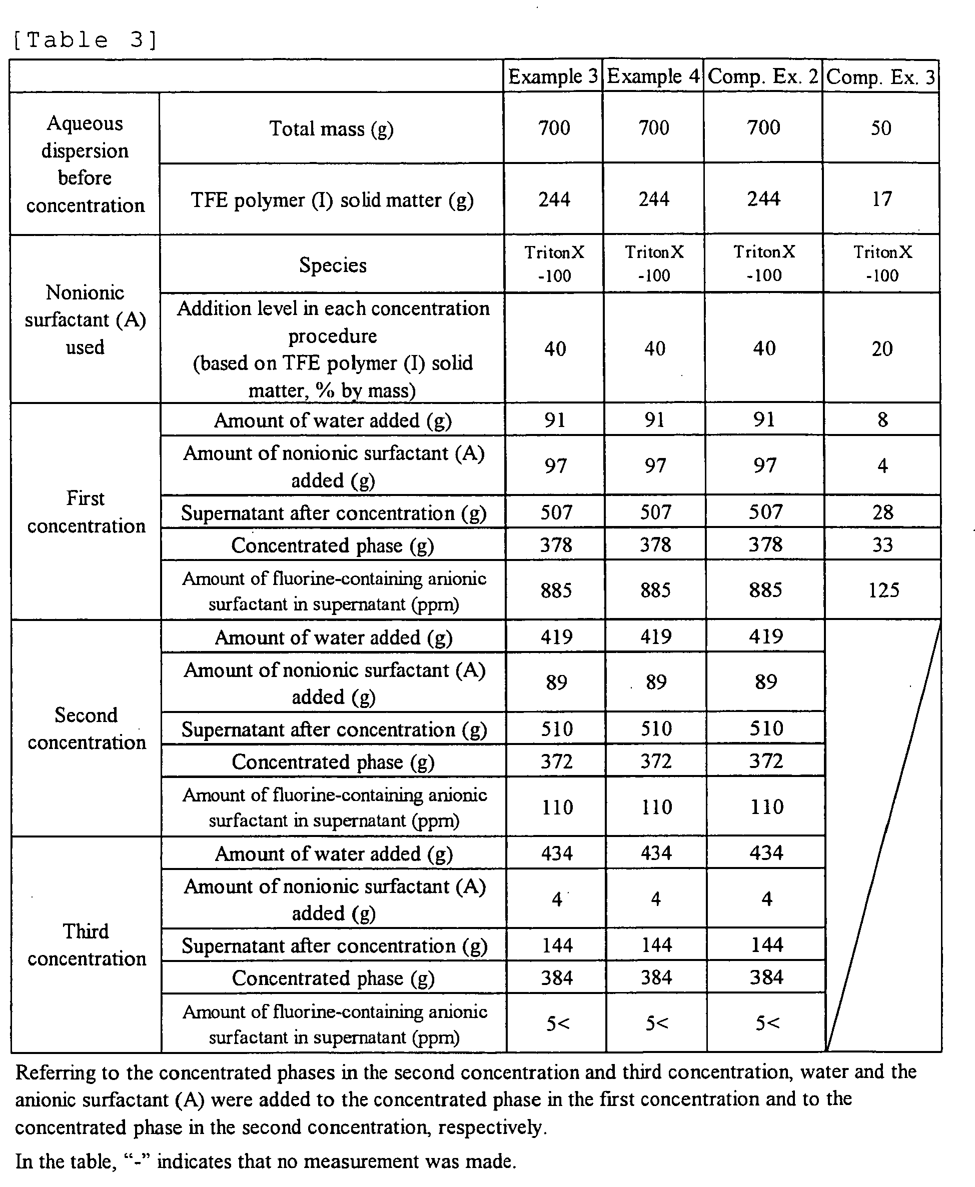

**[Table 4]**

| | TFE polymer aqueous dispersion | | | | | | TFE polymer aqueous dispersion-derived supernatant for assaying | | |
|---|---|---|---|---|---|---|---|---|---|
| | Viscosity (cp) | | | | | TFE polymer (1) solid matter (g) | Ratio between areas under detected lines A¹/A⁰ | Fluorine-containing anionic surfactant concentration (ppm) | Nonionic surfactant concentration (relative to TFE polymer (I) solid matter, % by mass) |
| | 25°C | 30°C | 35°C | 40°C | 45°C | | | | |
| Example 3 | 25.7 | 22.6 | 19.9 | 16.3 | 19.5 | 60 | 0.45 | 5< | 6.9 |
| | 25.4 | 22.3 | 20.1 | 16.7 | 16.5 | | | | |
| Example 4 | 25.3 | 22.5 | 20.4 | 19 | 17.6 | 60 | 0.58 | 5< | 6.9 |
| | 24.9 | 21.5 | 20.9 | 18.5 | 18.2 | | | | |
| Comp. Ex. 2 | 34.5 | 128 | 219.6 | 337.5 | 491.1 | 60 | 0.30 | 5< | 6.9 |
| As for each viscosity data, two measurements were made using the same sample. | | | | | | | | | |
| A⁰ = total area under detected line obtained by HPLC. | | | | | | | | | |
| A¹= area under detected line for retention time shorter than 16 minutes as obtained by HPLC. | | | | | | | | | |

While the increases in viscosity of the TFE polymer aqueous dispersions obtained in Examples 3 and 4 were slight even when the temperature was raised from 25°C to 45°C, the TFE polymer aqueous dispersion obtained in Comparative Example 2 showed rapid increases in viscosity as the temperature was raised. The nonionic surfactants (B) used in Examples 3 and 4 are higher in HLB than the nonionic surfactant (B) used in Comparative Example 2 and, therefore, they presumably could contribute to the decrease in viscosity-temperature dependency and the prevention of the viscosity increasing with the rise in temperature.

### Comparative Example 3

The same TFE polymer aqueous dispersion as used in Example 1 was adjusted to pH 9 by adding 0.07 g of 28% (by mass) aqueous ammonia, water and Triton X-100 as the nonionic surfactant (A) were added each in an amount given in Table 3, and the mixture was then stirred. gently at a temperature of 70°C for 6 hours and then allowed to stand to separate into two layers, followed by removal of the supernatant layer out of them. This procedure was carried out only once. The pretreatment fluoropolymer aqueous dispersion obtained was placed in a centrifuge with a diameter of 35 mm and a length of 100 mm and centrifuged at 25°C and at a gravitational acceleration of 1677G for 30 minutes. The thus-obtained transparent phase (supernatant for assaying) showed a fluorine-containing anionic surfactant (ammonium perfluorooctanoate [PFOA], C₇F₁₅COONH₄) concentration of 130 ppm. Then, Triton X-100 was added as the nonionic surfactant (B) so that the total nonionic surfactant mass might amount, after preparation, to 6.0% by mass of the TFE polymer (I) solid matter, whereby a TFE polymer aqueous dispersion with a TFE polymer (I) solid matter concentration of 60% by mass was obtained. The TFE polymer aqueous dispersion obtained and the supernatant for assaying as prepared were subjected to various measurements in the same manner as in Example 1.

The results are shown in Table 5.

**[Table 5]**

| | TFE polymer aqueous dispersion | | | | | | TFE polymer aqueous dispersion-derived supernatant for assaying | | |
|---|---|---|---|---|---|---|---|---|---|
| | Viscosity (cp) | | | | | TFE polymer (I) solid matter (g) | Ratio between areas under detected lines A¹/A⁰ | fluorine-containing anionic surfactant concentration (ppm) | Nonionic surfactant concentration (relative to TFE polymer (I) solid matter, % by mass) |
| | 25°C | 30°C | 35°C | 40°C | 45°C | | | | |
| Comp Ex. 3 | 22.5 | 22 | 21.6 | 21.2 | 20.6 | 60 | 0.38 | 130 | 6.0 |

| | | | | | | | | | |
|---|---|---|---|---|---|---|---|---|---|
| A° = total area under detected line obtained by HPLC. A¹ = area under detected line for retention time shorter than 16 minutes as obtained by HPLC. | | | | | | | | | |

For the TFE polymer aqueous dispersion obtained in Comparative Example 3, the fluorine-containing anionic surfactant concentration exceeded 100 ppm and, thus, that dispersion contained the fluorine-containing anionic surfactant abundantly although the viscosity-temperature dependency thereof was low.

### INDUSTRIAL APPLICABILITY

The fluoropolymer aqueous dispersion of the invention, which has the constitution described hereinabove, is low in viscosity-temperature dependency, excellent in moldability/processability and mechanical stability and can give fluoropolymer moldings having good surface characteristics and mechanical characteristics.

The method of producing the fluoropolymer aqueous dispersion according to the invention, which has the constitution described hereinabove, can produce fluoropolymer aqueous dispersion low in viscosity-temperature dependency and excellent in moldability/processability in a simple and efficient manner.

The fluoropolymer powder of the invention, which has the constitution described hereinabove, is excellent in moldability/processability. The fluoropolymer molding of the invention, which has the constitution described above, is excellent in surface characteristics, mechanical characteristics and other physical properties.

## Claims

1. A fluoropolymer aqueous dispersion which comprises a particle comprising a fluoropolymer dispersed in an aqueous medium in the presence of a nonionic surfactant,
wherein a supernatant for assaying as obtained by subjecting said fluoropolymer aqueous dispersion to 30 minutes of centrifugation at 25°C and at a gravitational acceleration of 1677G, when subjected to high-performance liquid chromatography [HPLC] under the conditions of a flow rate of 1.0 ml/minute and a column temperature of 40°C using an acetonitrile/0.05 M aqueous solution of phosphoric acid (60/40% by volume) mixture as a developing solution, followed by detection at an absorption wavelength at which said nonionic surfactant can be identified, shows a ratio (A¹/A⁰), which is the ratio between the total area (A⁰) under the detected line and the area (A¹) under the detected line over a retention time period shorter than 16 minutes, of not lower than 0.4 and
said supernatant for assaying has a fluorine-containing anionic surfactant content of not higher than 100 ppm.

2. The fluoropolymer aqueous dispersion according to Claim 1,
wherein the nonionic surfactant amounts to 5 to 15% by mass relative to the fluoropolymer solid matter in said fluoropolymer aqueous dispersion.

3. The fluoropolymer aqueous dispersion according to Claim 1 or 2,
wherein an electrolyte concentration is 0.05 µS/cm to 10 mS/cm.

4. The fluoropolymer aqueous dispersion according to Claim 1, 2 or 3,
wherein the fluorine-containing anionic surfactant content in the supernatant for assaying is not higher than 50 ppm.

5. The fluoropolymer aqueous dispersion according to Claim 1, 2 or 3,
wherein the fluorine-containing anionic surfactant content in the supernatant for assaying is not higher than 25 ppm.

6. The fluoropolymer aqueous dispersion according to Claim 1, 2, 3, 4 or 5,
wherein the fluoropolymer is a tetrafluoroethylene polymer.

7. The fluoropolymer aqueous dispersion according to Claim 1, 2, 3, 4, 5 or 6,
wherein the fluoropolymer is a perfluoropolymer.

8. The fluoropolymer aqueous dispersion according to Claim 1, 2, 3, 4, 5, 6 or 7,
wherein the fluoropolymer solid matter content is 20 to 80% by mass relative to said fluoropolymer aqueous dispersion.

9. A method of producing the fluoropolymer aqueous dispersion according to Claim 1, 2, 3, 4, 5, 6, 7 or 8 which comprises adding a nonionic surfactant (B) to a pretreatment fluoropolymer aqueous dispersion containing a nonionic surfactant (A),
wherein the supernatant for assaying as obtained by subjecting said pretreatment fluoropolymer aqueous dispersion to 30 minutes of centrifugation at 25°C and at a gravitational acceleration of 1677G has a fluorine-containing anionic surfactant content of not higher than 100 ppm,
said nonionic surfactant (A) has an HLB of 12 to 14 and
said nonionic surfactant (B) has an HLB of 13 to 15.

10. The method of producing the fluoropolymer aqueous dispersion according to Claim 9,
wherein an electrolyte is further added to the pretreatment fluoropolymer aqueous dispersion.

11. The method of producing the fluoropolymer aqueous dispersion according to Claim 9 or 10,
wherein the pretreatment fluoropolymer aqueous dispersion is obtained by carrying out a concentration operation at least twice.

12. The method of producing the fluoropolymer aqueous dispersion according to Claim 9, 10 or 11,
wherein the fluorine-containing anionic surfactant is the one to be present in carrying out a polymerization in the aqueous medium for obtaining the fluoropolymer and/or the one added after carrying out a concentration operation following the polymerization.

13. A fluoropolymer powder which is obtained by drying a wet powder obtained from the fluoropolymer aqueous dispersion according to Claim 1, 2, 3, 4, 5, 6, 7 or 8.

14. A fluoropolymer molding which is obtained by molding/processing the fluoropolymer aqueous dispersion according to Claim 1, 2, 3, 4, 5, 6, 7 or 8 or the fluoropolymer powder according to Claim 13.
